# EUROPEAN PATENT SPECIFICATION

(11) **EP 2 695 276 B1**
(45) Date of publication and mention of the grant of the patent: **16.12.2015**
(21) Application number: 12722523.3
(22) Date of filing: 05.04.2012
(51) Int. Cl.: H02J 3/38, B61L 5/18

(54) **POWER-SUPPLY SYSTEM FOR RAILWAY SIGNALLING DEVICES**
LEISTUNGSVERSORGUNGSSYSTEM FÜR EISENBAHNSIGNALGEBUNGSVORRICHTUNGEN
SYSTÈME D'ALIMENTATION ÉLECTRIQUE POUR DISPOSITIFS DE SIGNALISATION DE VOIE FERRÉE

(30) Priority: 05.04.2011 IT TO20110308
(43) Date of publication of application: 12.02.2014
(73) Proprietor: Ansaldo STS S.p.A., Genova (IT)
(72) Inventor: TRESANINI, Renzo, I-16151 Genova (IT); SPIGA, Paolo, I-16151 Genova (IT)
(74) Representative: Bongiovanni, Simone
(86) International application number: PCT/IB2012/051715
(87) International publication number: WO 2012/137178

(56) References cited:
- DE-A1- 19 838 672
- DE-B- 1 142 009
- US-A1- 2006 214 067

## Description

### TECHNICAL FILED

The present invention relates to a power-supply system for railway signalling devices.

### BACKGROUND ART

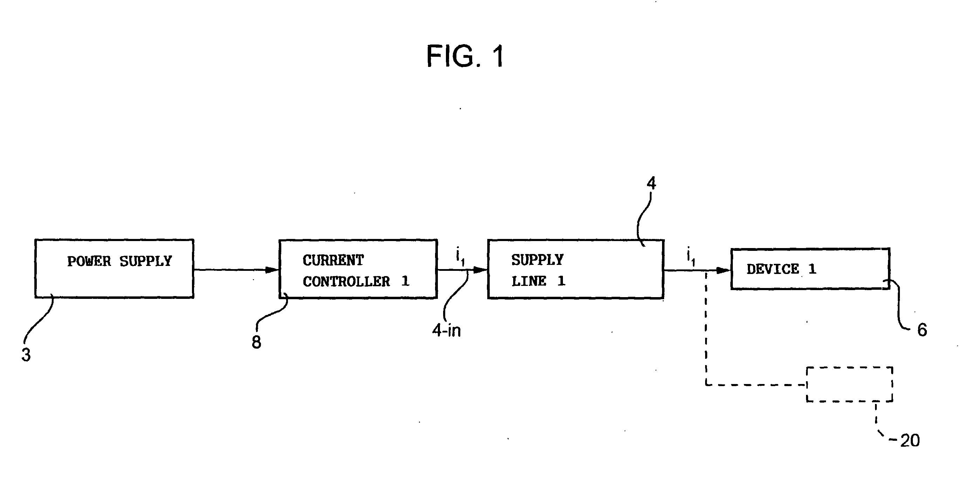

Known to the art are power-supply systems for railway signalling devices (see Figure 1, which represents the known art) in which a voltage source 3 of an a.c. type (for example, 220 V 50 Hz, or else 125 V 60 Hz, or 150 V 50 Hz) supplies by means of a two-wire supply cable 4 a signalling device 6 (for example, a light signalling device). Conveniently, the supply cable 4 extends along a railway line (not illustrated) along which the signalling device 6 is set.

A current-controller device 8 is set between the a.c. voltage source 3 and an input 4-in of the supply cable 4 and is designed to control continuously whether the current Il absorbed by the signalling device 6 falls within a safety range, namely, whether it is higher than a minimum threshold value Imin (typically indicating a failure in switching on of the device 6) and lower than a maximum threshold value Imax (typically indicating a short circuit of the signalling device 6). In the case where the measured current Im remains in the safety range (Imin<Im<Imax) there is detected proper operation of the signalling device 6; otherwise, there is detected a malfunctioning of the device 6.

In the case where there arises the need to provide a further signalling device 20 (for example, set in parallel to the device 6), it is necessary carry out an operation of recalibration of the current-controller device 8 in so far as the overall current absorbed by the two signalling devices is obviously higher than the current absorbed by the signalling device 6 alone.

Obviously, recalibration of the current-controller device is not necessary in the case where a dedicated supply line is used for said further device 20 (laying of a further and dedicated supply line is, however, a long and costly operation).

US 2006/0214067 A1 discloses a railway power supply system known in the art and a corresponding method for electrically powering an electrical device. The electrical device is situated along a railway and is powered through an electrically conductive line generally used for carrying an electrical signal to a railway signaling device. The power supply system includes a power injector coupled to the line. The line is used for carrying a signal to the signaling device at a first frequency value for performing a signaling operation. The power injector is configured to introduce at the line a power signal for powering the electrical device. The injected power is at a second frequency value that is sufficiently spread apart from the first frequency value to avoid interference with the signaling operation of the railway signaling device. The power supply system further includes a power collector coupled to the line and to the electrical device for passing the signal for powering the electrical device.

### DISCLOSURE OF INVENTION

The aim of the present invention is to enable, in a power-supply system of the type defined in Figure 1, supply of a further signalling device without entailing laying an auxiliary supply line or recalibration of the device 8.

The above aim is achieved by the present invention in so far as it relates to a power-supply system for railway signalling devices in which an a.c. voltage source supplies by means of a two-wire supply cable a first signalling device of a railway type; a current-controller device is set between the voltage source and an input of the supply cable for controlling whether the current absorbed by the first signalling device falls within a safety range, for example, the current absorbed is higher than a minimum threshold value and is lower than a maximum threshold value, wherein
said system **comprises**:
- at least one first tuned input filter designed to enable circulation of at least one harmonic component of said a.c. voltage in said current controller and hence in said two-wire supply cable;
- at least one tuned output filter connected at input to an output terminal of said two-wire cable and at output to the first signalling device; said tuned output filter being designed to enable circulation of said single harmonic component for supplying to said first signalling device a current that falls within said safety range;
- a rectifier device designed to extract a d.c. component of said a.c. voltage in order to inject it into said two-wire supply cable downstream of said current controller;
- a d.c.-component-extraction device connected at input to the output terminal of said two-wire cable and at output to a power-supply input of a second railway signalling device for supplying with just the d.c. component said second device without modifying the value of the current that circulates through said current controller and that is absorbed by just the first signalling device.

### BRIEF DESCRIPTION OF THE DRAWINGS

The invention will now be described with reference to the attached figures, which illustrate a preferred non-limiting embodiment thereof and in which:
- Figure 1 illustrates a power-supply system for railway signalling devices provided according to the known art;
- Figure 2 illustrates a power-supply system for railway signalling devices provided according to the present invention; and
- Figure 3 illustrates a generalization of the power-supply system of Figure 2.

### BEST MODE FOR CARRYING OUT THE INVENTION

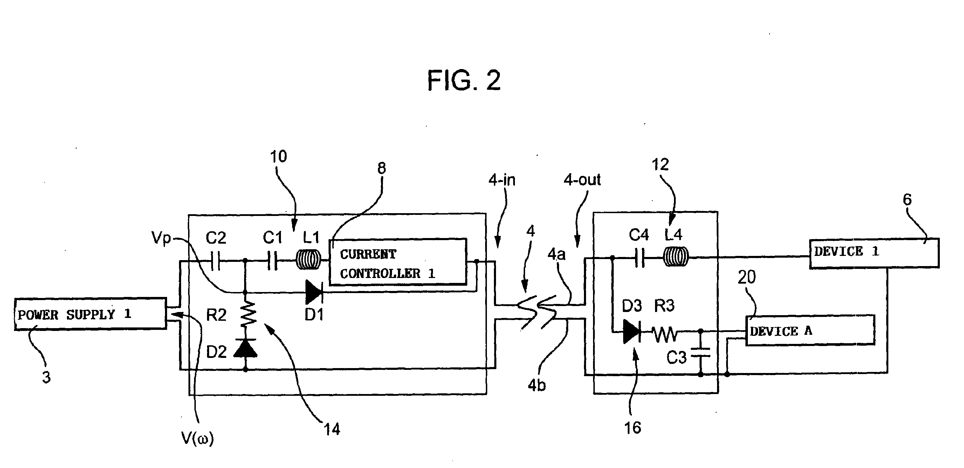

In **Figure 2** designated as a whole by 1 is a power-supply system for railway signalling devices in which a voltage source 3 of an a.c. type (for example, V(ω)=220 V 50 Hz, or else V(ω)=125 V 60 Hz, or V(ω)=150 V 50 Hz) supplies by means of a two-wire supply cable 4 (of a known type and comprising a first conductor 4a and a second conductor 4b) a first signalling device 6 (of a known type - for example a 20-W lamp).

Conveniently the supply cable 4 extends along a railway line (not illustrated) along which the signalling device 6 is located.

A current-controller device 8 (of a known type and consequently illustrated only schematically) is set between the a.c. voltage source 3 and an input 4-in of the supply cable 4 and is designed to control continuously whether the current absorbed by the first signalling device 6 falls within a safety range, i.e., whether it is higher than a minimum threshold value Imin (typically indicating a failure in switching on of the device 6) and is lower than a maximum threshold value Imax (typically indicating a short circuit of the device 6). In the case where the current measured Im remains in the safety range (Imin<Im<Imax), proper operation of the signalling device 6 is detected; otherwise, malfunctioning of the signalling device 6 is detected.

Provided according to the present invention are:
- at least one tuned input filter 10 designed to enable circulation of at least one harmonic component of the a.c. voltage V(ω) in the current controller 8 and hence in the two-wire supply cable 4;
- at least one tuned output filter 12 connected at input to an output terminal 4-out of the two-wire cable 4 and at output to the first signalling device 6 - the tuned output filter 12 being designed to enable circulation of the single harmonic component filtered by the filter 10 for supplying to the first signalling device 6 a current that falls within the safety range;
- a rectifier device 14 designed to extract the d.c. component from the a.c. voltage V(ω) to inject it into the two-wire supply cable 4 downstream of the current controller 8 thus obtaining a supply signal with non-zero mean value; and
- a d.c.-component-extraction device 16 connected at input to the terminal 4-out of the two-wire cable 4 and at output to a second railway signalling device 20 (of an auxiliary and known type) for supplying said device 20 with just the d.c. component without modifying the value of the current that circulates through the current controller 8 and that is absorbed by the first signalling device 6 alone; the two devices 6 and 20 may indifferently be of the same type or else of different types.

In this way, it is possible to insert a further load 20 at one end of the cable 4 without modifying the settings of the current-controller device 8, which has been already calibrated for supply of just the first signalling device 6. The current controller 1 only measures, as in the original system not comprising the device 20, the current absorbed by just the device 6.

In other words, the system 1 enables installation of a new device 20 in the proximity of a pre-existing signalling device 6, without any need to add a further dedicated wiring for its supply and without jeopardizing the characteristics of safety and the calibrations of the original system.

Preferably, the tuned input filter 10 comprises a capacitive element C1 and an inductive element L1 set in series to one another.

Once again according to the non-limiting example described, the tuned output filter 12 comprises a capacitive element C4 and an inductive element L4 set in series to one another.

The rectifier device 14 comprises a capacitive-resistive filter formed - in the schematic example illustrated - by a capacitor C2 and by a resistor R2 set in series and set between the terminals of the voltage source 3 and a diode D1 that collects the voltage Vp at output from the capacitive-resistive filter to obtain a level shift of the voltage sent to the input 4-in of the two-wire cable 4. The voltage in this point becomes a voltage with non-zero mean value, thanks to the non-linear device D2, which enables shifting of the minimum value of the voltage Vp to a value greater than or equal to zero.

Finally, the d.c.-component-extraction device 16 comprises at least one rectifier element (diode D3) set between the output 4-out and an input of the second signalling device 20. Conveniently, a resistor R3, set in series to the diode D3, limits the charging current of the capacitor C3, which is set in parallel to the inputs of the second signalling device 20.

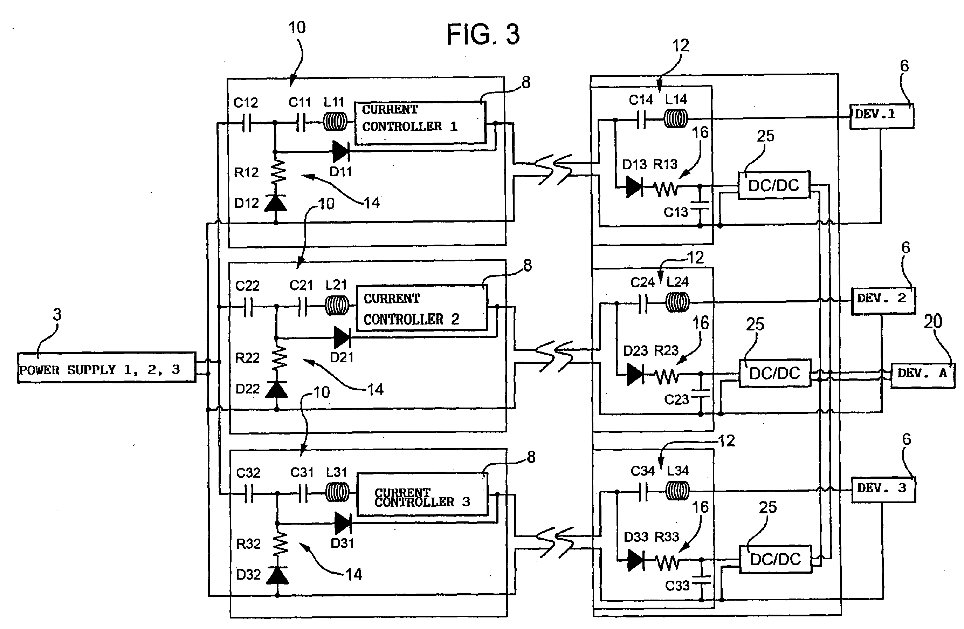

Amongst the advantages presented by the system 1 described above we may cite:
- a reduced circuit complexity and consequent high level of reliability;
- a high level of availability on the market and low cost of the components used;
- reduced complexity and burden of intervention on an original system comprising just the current controller 8 interconnected with just the signalling device 6 by means of the two-wire supply cable 4 (Figure 1);
- flexibility on the sizing of the supplementary power-supply system (devices 14 and 16) that are to supply an additional power to just the second signalling device 20;
- no need for recalibrating the original system, irrespective of the absorption of the second signalling device 20;
- in the event of malfunctioning or absence of operation of the auxiliary signalling device 20, regular operation of the signalling device 6; and
- possible modularity and expandability of the solution described above (Figure 3).

Figure 3 illustrates an expanded system 1 present in which are:
- a single power-supply source 3;
- a plurality of systems 1 (three, in the example) identical to the one illustrated in Figure 2 and each supplying a respective signalling device 6; and
- a DC/DC converter 25, set between the output of each d.c.-component-extraction device 16 and the input of a single second signalling device 20, which is supplied through the various two-wire lines 4.

In this way, the three two-wire lines 4 can be supplied simultaneously or in a mutually exclusive way.

## Claims

1. A power-supply system for railway signalling devices in which an a.c. voltage source (3) supplies by means of a two-wire supply cable (4) a first signalling device (6) of a railway type; a current-controller device (8) is set between the voltage source (3) and an input (4-in) of the supply cable for controlling whether the current absorbed by the first signalling device falls within a safety range, for example, the current absorbed is higher than a minimum threshold value and is lower than a maximum threshold value, wherein
said system **comprises:**
- at least one first tuned input filter (10) designed to enable circulation of at least one harmonic component of said a.c. voltage in said current controller (8) and hence in said two-wire supply cable (4);
- at least one tuned output filter (12) connected at input to an output terminal (4-out) of said two-wire cable and at output to the first signalling device (6); said tuned output filter (12) being designed to enable circulation of said single harmonic component for supplying to said first signalling device (6) a current that falls within said safety range;
- a rectifier device (14) designed to extract a d.c. component from said a.c. voltage to inject it into said two-wire supply cable downstream of said current controller (8); and
- a d.c.-component-extraction device (16) connected at input to the output terminal (4-out) of said two-wire cable and at output to a power-supply input of a second railway signalling device (20) for supplying said second device with just the d.c. component without modifying the value of the current that circulates through said current controller and that is absorbed by just the first signalling device (6).

2. The system according to Claim 1, wherein the tuned input filter (10) comprises a capacitive element (C1) and an inductive element (L1), preferably set in series to one another.

3. The system according to Claim 1 or Claim 2, wherein the tuned output filter (12) comprises a capacitive element (C4) and an inductive element (L4) preferably set in series to one another.

4. The system according to any one of the preceding claims, wherein said rectifier device (14) comprises a capacitive-resistive filter (C2, R2) and at least one first rectifier element (D2) designed to carry out a level shifting of the voltage to be sent on said two-wire cable (4).

5. The system according to Claim 4, wherein a second rectifier element (D1) is provided, which collects at output from the capacitive-resistive filter the voltage (Vp) to be sent to the input (4-in) of the two-wire cable (4).

6. The system according to any one of the preceding claims, wherein said d.c.-component-extraction device (16) comprises at least one rectifier element (D3).

## Patentansprüche

1. Leistungsversorgungssystem für Eisenbahnsignalanlagen, bei dem eine Wechselspannungsquelle (3) eine erste Signalanlage (6) vom Eisenbahntyp mittels eines Zweileiter-Versorgungskabels (4) versorgt;
eine Stromregelvoruchtung (8) zwischen die Spannungsquelle (3) und einem Eingang (4-in) des Versorgungskabels gesetzt ist zur Kontrolle, ob der von der ersten Signalanlage absorbierte Strom in einen Sicherheitsbereich fällt, beispielsweise, ob der absorbierte Strom größer ist als ein Minimum-Schwellenwert und kleiner ist als ein Maximum-Schwellenwert, wobei
das System aufweist:
- wenigstens ein erstes abgestimmtes Eingangsfilter (10), das so ausgelegt ist, dass die Zirkulation wenigstens einer harmonischen Schwingungskomponente des Wechselstroms im Stromregler (8) ermöglicht wird und somit in dem Zweileiter-Versorgungskabel (4);
- wenigstens ein abgestimmtes Ausgangsfilter (12), das am Eingang mit einem Ausgangsterminal (4-out) des Zweileiterkabels verbunden ist und am Ausgang an die erste Signalanlage (6); wobei das abgestimmte Ausgangsfilter (12) so ausgelegt ist, dass die Zirkulation der einzelnen harmonischen Schwingungskomponente ermöglicht wird, um der ersten Signalanlage (6) einen Strom zuzuführen, der in den Sicherheitsbereich fällt;
- eine Gleichrichtereinheit (14), die so ausgelegt ist, dass eine Gleichstromkomponente aus dem Wechselstrom extrahiert wird, um sie in das Zweileiter-Versorgungskabel stromabwärts des Stromreglers (8) einzuspeisen; und
- eine Gleichstromkomponenten-Extraktionseinrichtung (16), die am Eingang mit dem Ausgangsterminal (4-out) des Zweileiterkabels verbunden ist und am Ausgang mit einem Leistungsversorgungseingang der zweiten Eisenbahnsignalanlage (20), um die zweite Anlage nur mit der Gleichstromkomponente zu versorgen, ohne den Wert des Stroms zu modifizieren, der durch den Stromregler zirkuliert und welcher nur von der ersten Signalanlage (6) absorbiert wird.

2. System nach Anspruch 1, wobei das abgestimmte Eingangsfilter (10) ein kapazitives Element (C1) aufweist, und ein induktives Element (L1), die vorzugsweise in Serie miteinander gesetzt sind.

3. System nach Anspruch 1 oder 2, wobei das abgestimmte Ausgangsfilter (12) wenigstens ein kapazitives Element (C4) aufweist und ein induktives Element (L4), die vorzugsweise miteinander in Serie gesetzt sind.

4. System nach einem der vorhergehenden Ansprüche, wobei die Gleichrichtereinuchtung (14) ein kapazitives-resistives Filter (C2, R2) aufweist und wenigstens ein erstes Gleichrichterelement (D2) das so ausgelegt ist, dass ein Levelshift der Spannung durchgeführt wird, die auf das Zweileiterkabel (4) zu senden ist.

5. System nach Anspruch 4, wobei ein zweites Gleichrichterelement (D1) vorgesehen ist, welches die Spannung (Vp) am Ausgang des kapazitiv-resistiv Filters sammelt, die zum Eingang (4-in) des Zweileiterkabels (4) zu senden ist.

6. System nach einem der vorhergehenden Ansprüche, wobei das Gleichstromkomponenten-Extraktionsgerät (16) wenigstens ein Gleichrichterelement (D3) umfasst.

## Revendications

1. Système d'alimentation électrique pour des dispositifs de signalisation ferroviaire, dans lequel une source de tension alternative (3) alimente au moyen d'un câble d'alimentation bifilaire (4) un premier dispositif de signalisation (6) d'un type ferroviaire ; un dispositif régulateur de courant (8) est installé entre la source de tension (3) et une entrée (4-in) du câble d'alimentation pour contrôler si le courant absorbé par le premier dispositif de signalisation se trouve dans une plage de sécurité, par exemple, le courant absorbé est supérieur à une valeur de seuil minimale et est inférieur à une valeur de seuil maximale, dans lequel ledit système comprend :
- au moins un premier filtre d'entrée accordé (10) conçu pour permettre la circulation d'au moins une composante harmonique de ladite tension alternative dans ledit régulateur de courant (8) et de ce fait dans ledit câble d'alimentation bifilaire (4) ;
- au moins un filtre de sortie accordé (12) connecté en entrée à une borne de sortie (4-out) dudit câble bifilaire et en sortie au premier dispositif de signalisation (6) ; ledit filtre de sortie accordé (12) étant conçu pour permettre la circulation de ladite composante harmonique individuelle pour délivrer audit premier dispositif de signalisation (6) un courant qui se trouve dans ladite plage de sécurité ;
- un dispositif redresseur (14) conçu pour extraire une composante continue de ladite tension alternative pour l'injecter dans ledit câble d'alimentation bifilaire en aval dudit régulateur de courant (8) ; et
- un dispositif d'extraction de composant continue (16) connecté en entrée à la borne de sortie (4-out) dudit câble bifilaire et en sortie à une entrée d'alimentation électrique d'un deuxième dispositif de signalisation ferroviaire (20) pour alimenter ledit deuxième dispositif avec seulement la composante continue sans modifier la valeur du courant qui circule à travers ledit régulateur de courant et qui est absorbé seulement par le premier dispositif de signalisation (6).

2. Système selon la revendication 1, dans lequel le filtre d'entrée accordé (10) comprend un élément capacitif (C1) et un élément inductif (L1), de préférence montés en série l'un avec l'autre.

3. Système selon la revendication 1 ou la revendication 2, dans lequel le filtre de sortie accordé (12) comprend un élément capacitif (C4) et un élément inductif (L4), de préférence montés en série l'un avec l'autre.

4. Système selon l'une quelconque des revendications précédentes, dans lequel ledit dispositif redresseur (14) comprend un filtre capacitif-résistif (C2, R2) et au moins un premier élément redresseur (D2) conçu pour exécuter un décalage de niveau de la tension à envoyer sur ledit câble bifilaire (4).

5. Système selon la revendication 4, dans lequel un deuxième élément redresseur (D1) est prévu, lequel collecte à la sortie du filtre capacitif-résistif la tension (Vp) à envoyer à l'entrée (4-in) du câble bifilaire (4).

6. Système selon l'une quelconque des revendications précédentes, dans lequel ledit dispositif d'extraction de composant continue (16) comprend au moins un élément redresseur (D3).
